# EUROPEAN PATENT SPECIFICATION

(11) **EP 4 304 219 B1**
(45) Date of publication and mention of the grant of the patent: **25.02.2026**
(21) Application number: 22787360.1
(22) Date of filing: 25.03.2022
(51) Int. Cl.: H04W 8/00, H04W 4/80, H04W 28/02, H04W 40/24

(54) **DATA TRANSMISSION METHOD AND SYSTEM, ELECTRONIC DEVICE, AND STORAGE MEDIUM**
DATENÜBERTRAGUNGSVERFAHREN UND -SYSTEM, ELEKTRONISCHE VORRICHTUNG UND SPEICHERMEDIUM
PROCÉDÉ ET SYSTÈME DE TRANSMISSION DE DONNÉES, DISPOSITIF ÉLECTRONIQUE, ET SUPPORT D'INFORMATIONS

(30) Priority: 12.04.2021 CN 202110390636
(43) Date of publication of application: 10.01.2024
(73) Proprietor: Huawei Technologies Co., Ltd., Shenzhen, Guangdong 518129 (CN)
(72) Inventor: ZHONG, Wenguo, Shenzhen, Guangdong 518129 (CN); WANG, Hao, Shenzhen, Guangdong 518129 (CN); NIE, Zhenxing, Shenzhen, Guangdong 518129 (CN)
(74) Representative: Goddar, Heinz J.
(86) International application number: PCT/CN2022/083037
(87) International publication number: WO 2022/218131

(56) References cited:
- EP-A1- 3 506 517
- CN-A- 105 760 770
- CN-A- 110 121 902
- US-A1- 2017 150 337
- US-A1- 2018 034 923
- US-B1- 10 019 136

## Description

### TECHNICAL FIELD

This application relates to the field of wireless communication technologies, and in particular, to a data transmission method, a data transmission system, an electronic device, and a storage medium.

### BACKGROUND

With development of wireless communication technologies, electronic devices such as a smartphone and a tablet computer start to support a user in sharing data such as a picture and a document, which improves data sharing efficiency.

Currently, if a user needs to share data on one device to another device, the data may be shared in a wireless fidelity (Wireless Fidelity, Wi-Fi) manner. When data is shared in the Wi-Fi manner, a connection delay between devices is an important indicator for evaluating data sharing efficiency. In a related technology, if a connection is constantly maintained between devices, the connection delay is zero. However, this also means high device power consumption. If the connection between devices is started only when a device is selected for data transmission, it means a high connection delay.

No appropriate and effective solution is provided in a related technology to reduce the connection delay while ensuring low device power consumption.

EP 3506517 A1 describes a file sending method, wherein a first terminal performs scanning on a Bluetooth low energy (BLE) broadcast channel to obtain a broadcast packet sent by at least one second terminal. The first terminal determines at least one discoverable second terminal based on the broadcast packet. The first terminal determines a target terminal that is to receive a file and that is in the at least one discoverable second terminal. The first terminal sends a connection request to the target terminal and establishes a BLE connection between the first terminal and the target terminal. The first terminal sends Wi-Fi direct connection parameters to the target terminal by using a BLE data channel of the BLE connection. The first terminal receives a Wi-Fi direct establishment request sent by the target terminal, and after the Wi-Fi direct establishment request is received, it performs handshake with the target terminal to establish Wi-Fi direct, where the Wi-Fi direct establishment request is sent by the target terminal to the first terminal after the target terminal performs parameter configuration of the target terminal based on the connection parameters. The first terminal sends the file to the target terminal by using the Wi-Fi direct established between the first terminal and the target terminal.
US 2018/034923 A1 describes a computing device with a discovery framework that includes a discovery user interface (UI) and a discovery engine configured to use various standard discovery protocols in a protocol stack of the computing device. The discovery engine may respond to an invocation of the discovery framework by determining discovery criteria and based thereon selecting one of the discovery protocols, requesting discovery through the selected discovery protocol, receiving corresponding first discovery results, and maintaining a discovery list comprised of indicia of devices discovered through at least the selected discovery protocol. The discovery UI allows interactive adjustment of the discovery criteria, displays the discovery list, and responds to selection of a discovered device in the discovery list by enabling a connection with the discovered device based on a network address of the discovered device obtained through one of the discovery protocols.
US 2017/150337 A1 describes a mobile communication device, wherein a baseband processing circuit of the mobile communication device is configured to provide target criteria to a proxy discovery device, the target criteria characterizing a desired wireless connection of the mobile communication device, receive a proxy report from the proxy discovery device detailing discovery results that satisfy the target criteria, and select a provider device that satisfies the target criteria to establish a wireless connection with based on the proxy report.

### SUMMARY

The invention is defined by the appended claims. In view of this, a data transmission method, a data transmission system, an electronic device, and a storage medium are provided. According to the data transmission method provided in embodiments of this application, a first device performs device discovery when detecting a preset trigger signal acting on to-be-shared data, and establishes physical links with n discovered second devices before a target device is selected for data transmission. This reduces a connection delay between devices and ensures low device power consumption while ensuring ease-of-use of a user operation.

According to a first aspect, an embodiment of this application provides a data transmission method. The method is applied to a data transmission system including a first device and n second devices, where n is greater than one, and the method includes:

The first device performs device discovery when detecting a preset trigger signal acting on to-be-shared data.

The first device establishes physical links with the n discovered second devices, where Wi-Fi direct connection functions of the first device and the n second devices are enabled, and for each of the n discovered second devices, the establishing a physical link comprises exchanging physical layer capability information and performing IP address allocation and information exchange.

The first device sends the to-be-shared data to a target device when detecting a selection signal of the target device, where the target device is one of the n second devices.

In this implementation, the first device performs device discovery when detecting the preset trigger signal acting on the to-be-shared data. When the Wi-Fi direct connection functions of the first device and the n discovered second devices are enabled, the first device establishes the physical links with the n second devices, to avoid a case, in a related technology, in which device power consumption is high because a connection between devices is constantly maintained, ensure low device power consumption, and prolong standby duration of the device. In addition, the first device has established the physical links with the n second devices before the target device is selected for data transmission. This avoids a case, in a related technology, in which a connection delay is high because the connection between devices is started only when a device is selected for data transmission, reduces the connection delay between devices, and improves data sharing efficiency.

In a possible implementation, that the first device performs device discovery when detecting a preset trigger signal acting on to-be-shared data includes:

The first device sends first information when detecting the preset trigger signal acting on the to-be-shared data.

That the first device establishes physical links with the n discovered second devices includes:

For any one of the n second devices, the second device establishes a physical link with the first device based on the received first information, or the first device establishes a physical link with the second device after receiving response information fed back by the second device.

In this implementation, when detecting the preset trigger signal acting on the to-be-shared data, the first device performs device discovery by sending the first information, so that the first device establishes the physical links with the n discovered second devices, or the discovered second device actively establishes the physical link with the first device, to avoid a case, in a related technology, in which device power consumption is high because the connection between devices is constantly maintained, further ensure low device power consumption, and prolong standby duration of the device.

In another possible implementation, after that the first device establishes physical links with the n discovered second devices, the method further includes:

The first device establishes a logical link with at least one of the n second devices.

That the first device sends the to-be-shared data to a target device when detecting a selection signal of the target device includes:

The first device sends the to-be-shared data to the target device when the first device detects the selection signal of the target device and the target device meets a first preset condition, where
the first preset condition includes that the physical link and the logical link are established between the first device and the target device.

In this implementation, the first device establishes the logical link with at least one of the n second devices before the target device is selected for data transmission. When the first device detects the selection signal of the target device, if the selected target device has established the physical link and the logical link with the first device, the first device may directly send the to-be-shared data to the target device, to further reduce the connection delay between devices and improve data sharing efficiency.

In a possible implementation, the method further includes:
The first device establishes the logical link with the target device when the first device detects the selection signal of the target device and the target device does not meet the first preset condition.

The first device sends the to-be-shared data to the target device after the logical link is successfully established.

In this implementation, when the first device detects the selection signal of the target device, if the selected target device has established the physical link with the first device but has not established the logical link, the first device may establish the logical link based on the physical link, and send the to-be-shared data to the target device after the logical link is successfully established. This reduces the connection delay between devices in comparison with a case, in a related technology, in which a physical link connection between devices is started only when a device is selected for data transmission.

In another possible implementation, that the first device establishes a logical link with at least one of the n second devices includes:
The first device sorts the n second devices according to a first preset rule.

The first device establishes logical links with first m sorted second devices, where m is a positive integer less than n, and
the first preset rule indicates that a sorting sequence of the second device is related to an estimated probability that the second device is selected.

In this implementation, the first device sorts the n second devices according to the first preset rule, and selects some second devices ranking in the front to establish the logical links. There is a high probability that the second devices ranking in the front are selected. Therefore, if subsequently selected target devices are these second devices, because the physical link and the logical link have been established between the target device and the first device, the first device may immediately start data transmission, to further reduce the connection delay between devices and improve data sharing efficiency.

In a possible implementation, the method further includes:
for the at least one of the n second devices, starting countdown after receiving the first information; and
after the countdown times out, disabling, by the at least one second device, the Wi-Fi direct connection function or entering a low power consumption state.

In this implementation, the second device starts the countdown after receiving the first information sent by the first device, and, after the countdown times out, disables the Wi-Fi direct connection function or enters the low power consumption state, so that the second device can intelligently determine whether to disconnect the physical link and/or the logical link with the first device, to avoid unnecessary device power consumption.

In a possible implementation, the method further includes:
The first device sends second information when detecting the selection signal of the target device.

The second devices except the target device disable the Wi-Fi direct connection function or enter the low power consumption state based on the received second information.

In this implementation, the first device sends the second information to notify the second devices except the target device to disable the Wi-Fi direct connection function or enter the low power consumption state, so that the second devices except the target device disconnect the physical links and/or the logical links with the first device, to further reduce device power consumption of the second devices except the target device.

In a possible implementation, the method further includes:
The first device sends third information after data transmission with the target device ends.

The n second devices except the target device enable the Wi-Fi direct connection function based on the received third information.

In this implementation, after the data transmission ends, the first device sends the third information to notify the surrounding second device to enable the Wi-Fi direct connection function and wait for a connection, to further reduce the connection delay between devices and improve subsequent data sharing efficiency.

In a possible implementation, the method further includes:
The first device sends fourth information after a broadcast service ends.

The n second devices disable the Wi-Fi direct connection function or enter the low power consumption state based on the received fourth information.

In this implementation, after the broadcast service ends, the first device sends the fourth information to notify the n second devices to disable the Wi-Fi direct connection function or enter the low power consumption state, so that the n second devices disconnect the physical links and/or the logical links with the first device, to avoid unnecessary device power consumption.

According to a second aspect, an embodiment of this application provides a data transmission method, where the method is applied to a first device and includes:
performing device discovery when detecting a preset trigger signal acting on to-be-shared data;
establishing physical links with n discovered second devices, where Wi-Fi direct connection functions of the first device and the n second devices are enabled, n is greater than one, and for each of the n discovered second devices, the establishing a physical link comprises exchanging physical layer capability information and performing IP address allocation and information exchange; and
sending the to-be-shared data to a target device when detecting a selection signal of the target device, where the target device is one of the n second devices.

In a possible implementation, the performing device discovery when detecting a preset trigger signal acting on to-be-shared data includes:
sending first information when detecting the preset trigger signal acting on the to-be-shared data, where
for any one of the n second devices, a physical link between the second device and the first device is established by the second device based on the received first information, or is established by the first device after the first device receives response information fed back by the second device.

In another possible implementation, after the establishing physical links with n discovered second devices, the method further includes:
establishing a logical link with at least one of the n second devices; and
the sending the to-be-shared data to a target device when detecting a selection signal of the target device includes:
   sending the to-be-shared data to the target device when the selection signal of the target device is detected and the target device meets a first preset condition, where
   the first preset condition includes that the physical link and the logical link are established between the first device and the target device.

In a possible implementation, the method further includes:
establishing the logical link with the target device when the selection signal of the target device is detected and the target device does not meet the first preset condition; and
sending, by the first device, the to-be-shared data to the target device after the logical link is successfully established.

In another possible implementation, the establishing a logical link with at least one of the n second devices includes:
sorting the n second devices according to a first preset rule; and
establishing logical links with first m sorted second devices, where m is a positive integer less than n.

In another possible implementation, the first information further indicates the at least one of the n second devices to: start countdown after the at least one second device receives the first information; and after the countdown times out, disable the Wi-Fi direct connection function or enter a low power consumption state.

In a possible implementation, the method further includes:
sending second information when detecting the selection signal of the target device, where the second information indicates the second devices except the target device to disable the Wi-Fi direct connection function or enter the low power consumption state.

In a possible implementation, the method further includes:
sending third information after data transmission with the target device ends, where the third information indicates the n second devices except the target device to enable the Wi-Fi direct connection function.

In a possible implementation, the method further includes:
sending fourth information after a broadcast service ends, where the fourth information indicates the n second devices to disable the Wi-Fi direct connection function or enter the low power consumption state.

According to a third aspect, an embodiment of this application provides a data transmission system, where the data transmission system includes a first device and n second devices. The data transmission system is configured to perform the data transmission method provided in any one of the first aspect or the possible implementations of the first aspect.

According to a fourth aspect, an embodiment of this application provides an electronic device, and the electronic device includes:
a processor; and
a memory, configured to store instructions that may be executed by the processor, where
the processor is configured to implement the data transmission method provided in any one of the second aspect or the possible implementations of the second aspect when executing the instructions.

According to a fifth aspect, an embodiment of this application provides a non-volatile computer-readable storage medium, where the non-volatile computer-readable storage medium stores computer program instructions. When the computer program instructions are executed by a processor, the data transmission method provided in any one of the second aspect or the possible implementations of the second aspect is implemented.

According to a sixth aspect, a data transmission apparatus is provided. The apparatus includes at least one unit, and the at least one unit is configured to implement the data transmission method provided in any one of the second aspect or the possible implementations of the second aspect.

According to a seventh aspect, an embodiment of this application provides a computer program product, and the computer program product includes computer-readable code or a non-volatile computer-readable storage medium carrying the computer-readable code. When the computer-readable code runs in an electronic device, a processor in the electronic device performs the data transmission method provided in any one of the second aspect or the possible implementations of the second aspect.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a schematic diagram of a link connection policy according to a related technology and an embodiment of this application;
FIG. 2 is a schematic diagram of a structure of an electronic device according to an example embodiment of this application;
FIG. 3 is a flowchart of a data transmission method according to an example embodiment of this application;
FIG. 4A to FIG. 4E are a schematic diagram of an interface related to a data transmission method according to an example embodiment of this application;
FIG. 5 is a flowchart of a data transmission method according to another example embodiment of this application;
FIG. 6A and FIG. 6B are a flowchart of a data transmission method according to another example embodiment of this application;
FIG. 7 is a flowchart of a data transmission method according to another example embodiment of this application;
FIG. 8 is a schematic diagram of a principle of a data transmission method according to an example embodiment of this application; and
FIG. 9 is a block diagram of a data transmission apparatus according to an example embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some embodiments, methods, means, elements and circuits that are well-known to a person skilled in the art are not described in detail, so that the subject matter of this application is highlighted.

First, several terms in embodiments of this application are described.
1. Physical link: The physical link is a link between physical nodes. For example, one physical link includes a Wi-Fi connection between a computer and a router.
   The physical link is a link formed after a data link layer is successfully established between two devices, where the data link layer is a data link layer in a transmission control protocol (Transmission Control Protocol, TCP) / Internet protocol (Internet Protocol, IP) protocol. A process of establishing the physical link between two devices includes: Both devices enable Wi-Fi direct connection functions, and the two devices exchange physical layer capability information (such as signal synchronization information, transmission frequency, and transmission power) and perform IP address allocation and information exchange, generally in correspondence to functions of the data link layer in the TCP/IP protocol.
2. Logical link: The logical link is also referred to as a data link or a service link, and is a link between logical nodes. The logical link is used to transmit service data and control signaling. For example, one logical link includes a TCP protocol connection established when a website is browsed.

In embodiments of this application, when both devices enable Wi-Fi direct connection functions, a physical link may be established between the two devices. After the physical link is established between the two devices, the logical link may be established between the two devices. One physical link may include several different logical links.

The logical link is a link formed after a network layer and a transport layer in a TCP/IP protocol are successfully established between two devices. A process of establishing the logical link between two devices includes: A transport layer (for example, a user datagram protocol (User Datagram Protocol, UDP) / TCP layer in the TCP/IP protocol) connection is established between the two devices, for example, an encrypted socket (Socket) security channel is established. Based on requirements of a service scenario, a communication key between devices may be negotiated during the establishment of the logical link. A subsequent service performs data transmission based on the established logical link.

It should be noted that the physical link is static, and parameters such as a maximum bandwidth and a maximum throughput of the physical link are fixed. The logical link is dynamically changed. One logical link may be dynamically carried on any physical link. One new logical link may be created in the physical link based on a network condition, or a logical link may be deleted. A bandwidth of the logical link in the physical link is also dynamically changed.

An all-scenario distributed operating system in an era of the Internet of Everything needs to improve data sharing efficiency between devices and implement seamless cross-device collaboration experience, so that a user enjoys consistent experience between a local device and a remote device. A connection delay between devices is an important indicator for evaluating data sharing efficiency. In a related technology, if a connection is constantly maintained between devices, the connection delay is zero. However, this also means high device power consumption. If the connection between devices is started only when a device is selected for data transmission, it means a high connection delay. No appropriate and effective solution is provided in a related technology to reduce the connection delay and ensure low device power consumption.

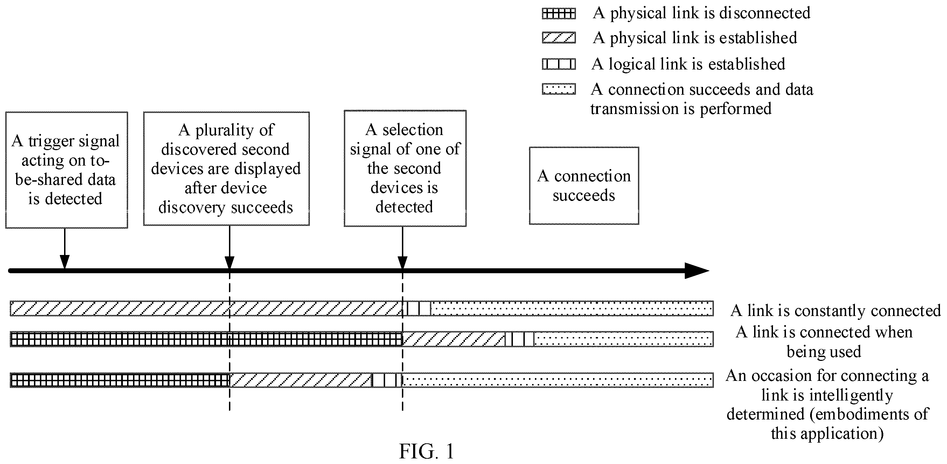

FIG. 1 is a schematic diagram of a link connection policy in a scenario in which data is shared between devices in a Wi-Fi manner according to a related technology and an embodiment of this application. As shown in FIG. 1, in a related technology, data is shared between devices in the Wi-Fi manner, and the following two possible implementations are mainly included. A first possible implementation is a solution in which a link is constantly connected. To be specific, after enabling a Wi-Fi function, a first device keeps a physical link constantly working, performs device discovery when detecting a trigger signal of to-be-shared data, displays a plurality of discovered second devices after the device discovery succeeds, establishes a logical link when detecting a selection signal of a second device, and performs data transmission after the logical link is successfully established. After a service ends, the first device actively disconnects the logical link, but still maintains the physical link. However, in this implementation, the physical link between devices is constantly in a working state, which ensures a low connection delay, but causes high device power consumption and short standby duration.

A second possible implementation is a solution in which a link is connected when the link is used. To be specific, a first device performs device discovery when detecting a trigger signal of to-be-shared data, displays a plurality of discovered second devices after the device discovery succeeds, establishes the physical link when detecting a selection signal of a second device, establishes a logical link after the physical link is successfully established, and performs data transmission after the logical link is successfully established. However, in this implementation, because both the physical link and the logical link are established after the second device is selected, a periodicity required for a connection between devices is long, and it usually takes 1 to 2 seconds to complete the connection. Consequently, a connection delay between devices is long, and data sharing efficiency is low.

However, in a data transmission method provided in embodiments of this application, a link connection occasion is intelligently determined. To be specific, a first device performs device discovery when detecting a preset trigger signal acting on to-be-shared data. When Wi-Fi direct connection functions of the first device and n discovered second devices are enabled, the first device establishes a physical link with the n discovered second devices, to avoid a case, in a related technology, in which device power consumption is high because a connection between devices is constantly maintained, ensure low device power consumption, and prolong standby duration of the device. In addition, the first device sends the to-be-shared data to a target device when detecting a selection signal of one of the second devices, namely, a target device. The first device has established the physical link with the n second devices before the target device is selected for data transmission. This avoids a case, in a related technology, in which a connection delay is high because the connection between devices is started only when a device is selected for data transmission, reduces the connection delay between devices, and improves data sharing efficiency.

Optionally, after the logical link is established, a secure sockets layer (Secure Sockets Layer, SSL) encrypted connection is further established between devices. This is not limited in embodiments of this application.

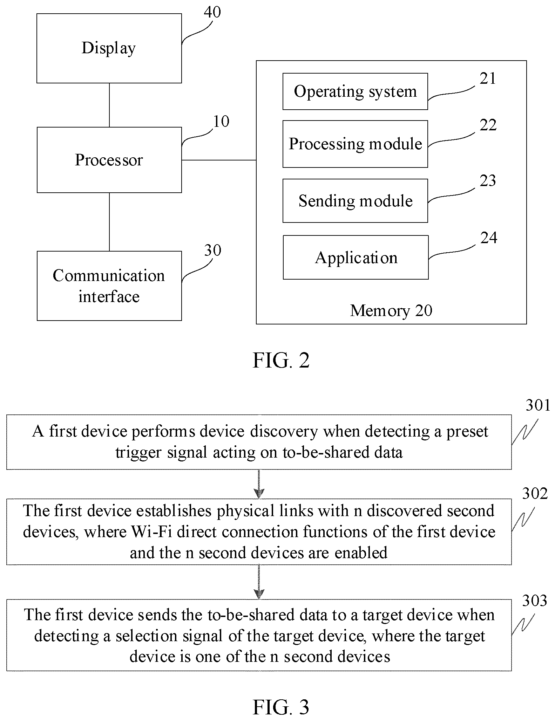

FIG. 2 is a schematic diagram of a structure of an electronic device provided in an example embodiment of this application.

The electronic device is a device having a Wi-Fi function. Optionally, the electronic device further has a Bluetooth function.

The electronic device is a first device or a second device in embodiments of this application. The first device is also referred to as a discovery device or a transmitting end device, and the second device is also referred to as a discovered device or a receiving end device.

For example, the electronic device is a mobile phone, a vehicle-mounted terminal, an uncrewed aerial vehicle, a tablet computer, an e-book reader, smart glasses, a smartwatch, a moving picture experts group audio layer 3 (Moving Picture Experts Group Audio Layer III, MP3) player, a moving picture experts group audio layer 4 (Moving Picture Experts Group Audio Layer IV, MP4) player, a notebook computer, a laptop portable computer, or a desktop computer. A type of the electronic device is not specifically limited in this embodiment of this application.

As shown in FIG. 2, the electronic device includes a processor 10, a memory 20, a communication interface 30, and a display 40. A person skilled in the art may understand that the electronic device may include more or fewer components than those shown in the figure, or combine some components, or have a different component arrangement. The processor 10 is a control center of the electronic device. The processor 10 is connected to all parts of the entire electronic device by using various interfaces and lines, and performs various functions of the electronic device and data processing by running or executing a software program and/or a module stored in the memory 20 and invoking data stored in the memory 20, to perform overall monitoring on the electronic device.

The processor 10 may be implemented by a CPU or a graphics processing unit (Graphics Processing Unit, GPU).

The memory 20 may be configured to store a software program and a module. By running the software program and the module that are stored in the memory 20, the processor 10 performs various function applications and data processing. The memory 20 may mainly include a program storage area and a data storage area. The program storage area may store an operating system 21, a processing module 22, a sending module 23, an application 24 required by at least one function, and the like. The data storage area may store data created based on use of the electronic device, and the like. In addition, the memory 20 may be implemented by any type of volatile or non-volatile storage device or a combination thereof, for example, a static random access memory (Static Random Access Memory, SRAM), an electrically erasable programmable read-only memory (Electrically Erasable Programmable Read-Only Memory, EEPROM), an erasable programmable read-only memory (Erasable Programmable Read-Only Memory, EPROM), a programmable read-only memory (Programmable Read-Only Memory, PROM), a read-only memory (Read-Only Memory, ROM), a magnetic memory, a flash memory, a magnetic disk, or an optical disc. Correspondingly, the memory 20 may further include a memory controller, to provide the processor 10 with access to the memory 20.

The display 40 is configured to display an image, a video, and the like. The display 40 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 40, where N is a positive integer greater than 1. The display 40 may be configured to display information entered by a user or information provided to a user, and various graphical user interfaces (graphical user interfaces, GUI). For example, the display 40 may display a photo, a video, a web page, or a file. For another example, the display 40 may display a graphical user interface. The graphical user interface may include a status bar, a navigation bar that may be hidden, a time and weather widget (widget), and an application icon, for example, a browser icon. The status bar includes an operator name, a mobile network (for example, 4G), time, and a battery level. The navigation bar includes an icon of a back (back) button, an icon of a home (home) button, and an icon of a forward button. In addition, it may be understood that in some embodiments, the status bar may further include a Bluetooth icon, a Wi-Fi icon, an icon of an externally connected device, and the like. It may be further understood that in some other embodiments, the graphical user interface may further include a dock bar, and the dock bar may include an icon of a commonly used application and the like. After detecting a touch event performed by a user on a control by using a finger (a stylus or the like), in response to the touch event, the processor 10 launches a user interface corresponding to the control, and displays the user interface on the display 40.

In this embodiment of this application, the display 40 may be one integrated flexible display, or may be a spliced display including two rigid screens and one flexible screen located between the two rigid screens.

After the processor 10 performs the data transmission method provided in embodiments of this application, the electronic device may establish a connection to another electronic device by using an antenna 1, an antenna 2, or a universal serial bus (Universal Serial Bus, USB) interface, transmit data according to the data transmission method provided in embodiments of this application, and control the display 40 to display a corresponding user interface.

When the electronic device is the first device in embodiments of this application, the processor 20 performs the following functions by running the processing module 22: performing device discovery when selecting a preset trigger signal acting on to-be-shared data; and establishing physical links with n discovered second devices, where Wi-Fi direct connection functions of the first device and the n second devices are enabled. The processor 20 executes the following function by running the sending module 23: sending the to-be-shared data to a target device when detecting a selection signal of the target device, where the target device is one of the n second devices.

The following describes, by using several example embodiments, a data transmission method provided in embodiments of this application.

FIG. 3 is a flowchart of a data transmission method according to an example embodiment of this application. In this embodiment, an example in which the method is applied to a data transmission system including a first device and n second devices is used for description. The method includes the following steps.

Step 301: The first device performs device discovery when detecting a preset trigger signal acting on to-be-shared data.

Optionally, when the first device detects the preset trigger signal acting on the to-be-shared data, the first device determines whether a Wi-Fi direct connection function of the first device is enabled. If the Wi-Fi direct connection function of the first device is not enabled, the Wi-Fi direct connection function is enabled, and device discovery is performed. If the Wi-Fi direct connection function of the first device is enabled, device discovery is directly performed.

Compared with a normal standby state, the Wi-Fi direct connection function has higher power consumption and specific connection duration (for example, the connection duration is any value from hundreds of milliseconds to several seconds). Optionally, the Wi-Fi direct connection function is a Wi-Fi peer-to-peer (peer-to-peer, P2P) service, a Wi-Fi wireless neighborhood aware networking (Neighborhood Aware Networking, NAN) service, or a vendor private Wi-Fi connection service. This is not limited in this embodiment of this application.

Optionally, a type of the to-be-shared data includes at least one of a link, a picture, audio, a video, a text, an application, a file, and an instruction. This is not limited in this embodiment of this application.

The preset trigger signal is a user operation signal used to trigger performance of device discovery. For example, the preset trigger signal includes any one or a combination of a tap operation signal, a slide operation signal, a press operation signal, or a press and hold operation signal.

In a possible implementation, the preset trigger signal is a second trigger signal acting on a sharing control of the to-be-shared data. For example, when detecting a first trigger signal acting on the to-be-shared data, the first device displays the sharing control corresponding to the to-be-shared data. When detecting the second trigger signal acting on the sharing control, the first device performs device discovery and displays a sharing interface.

In another possible implementation, the preset trigger signal may also be implemented in a voice form. For example, the first device receives a voice signal input by a user, and parses the voice signal to obtain voice content. When there is a keyword that matches preset information corresponding to the to-be-shared data in the voice content, the preset trigger signal acting on the to-be-shared data is detected.

Optionally, when detecting the preset trigger signal acting on the to-be-shared data, the first device performs device discovery and displays the sharing interface. The sharing interface includes a device identifier of the discovered second device or first prompt information, where the first prompt information indicates that the second device is not discovered yet.

Optionally, in a device discovery process, the first device sequentially displays, on the sharing interface, device identifiers of the discovered second devices.

Step 302: The first device establishes physical links with the n discovered second devices, where the Wi-Fi direct connection functions of the first device and the n second devices are enabled.

Optionally, each time a second device is discovered, the first device establishes the physical link with the discovered second device. Alternatively, after device discovery of the n second devices succeeds, the first device establishes the physical links with the n discovered second devices.

For any one of the n second devices, the Wi-Fi direct connection function of the second device may be enabled when the second device is discovered, or may be enabled after the second device is discovered.

It should be noted that the first device establishes the physical links with the n discovered second devices, and a physical connection between the first device and the second device may be actively established by the first device, or may be actively established by the second device. This is not limited in this embodiment of this application.

Optionally, after the first device successfully establishes the physical links with the n second devices, the first device establishes logical links with the n second devices. In other words, both the physical link and the logical link are established before the user selects a target device, to further shorten a connection delay between devices, so that the first device can immediately perform data transmission with the target device when subsequently detecting a selection signal of the target device. For example, the logical link is an encrypted socket security channel.

However, because the first device will subsequently perform data transmission with a selected second device, namely, the target device, if the first device has previously established the logical link with each of the n second devices, resources may be unnecessarily occupied. Therefore, the first device may select at least one of the n second devices to establish the logical link with the at least one selected second device.

It should be noted that, for a process in which the first device establishes the logical link with the at least one of the n second devices, refer to related details in the following embodiments. Details are not described herein.

Step 303: The first device sends the to-be-shared data to the target device when detecting a selection signal of the target device, where the target device is one of the n second devices.

The selection signal of the target device is a user operation signal used to trigger sending of the to-be-shared data to the target device. For example, the selection signal includes any one or a combination of a tap operation signal, a slide operation signal, a press operation signal, or a press and hold operation signal.

In a possible implementation, after the device discovery succeeds, the first device displays a device identifier list, where the device identifier list includes the device identifiers respectively corresponding to the n discovered second devices. When the first device receives a selection operation signal acting on the device identifier in the device identifier list, it indicates that the first device detects a selection signal of a second device, namely, the target device, corresponding to the device identifier. The first device performs data transmission with the target device, and a data transmission process includes: The first device sends the to-be-shared data to the second device.

In another possible implementation, the selection signal of the target device may alternatively be implemented in a voice form. This is not limited in this embodiment of this application.

Optionally, the first device outputs second prompt information after completing sending the to-be-shared data to the target device, where the second prompt information indicates that the to-be-shared data is successfully sent. For example, a representation form of the second prompt information includes at least one of a text, a graph, a prompt tone, and a flash.

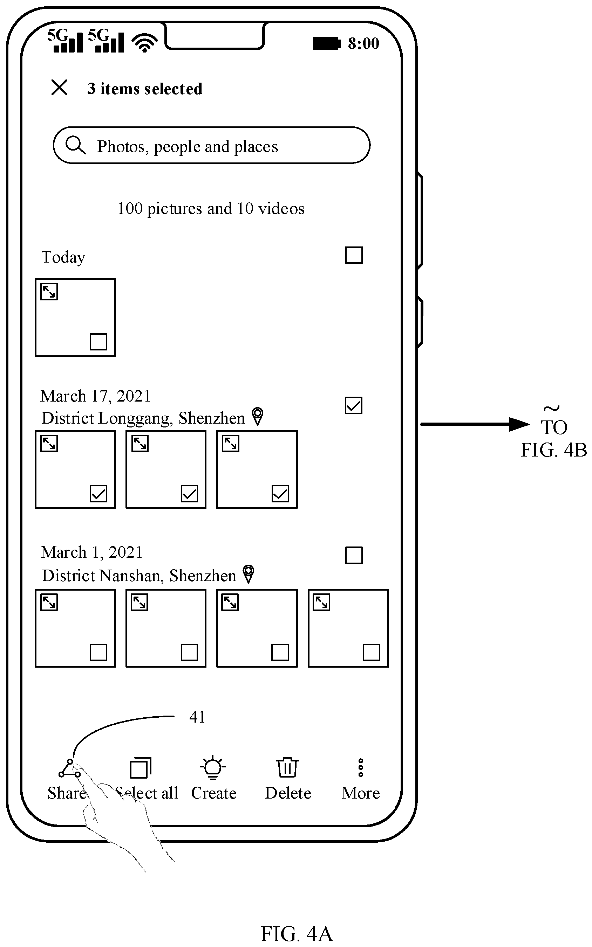

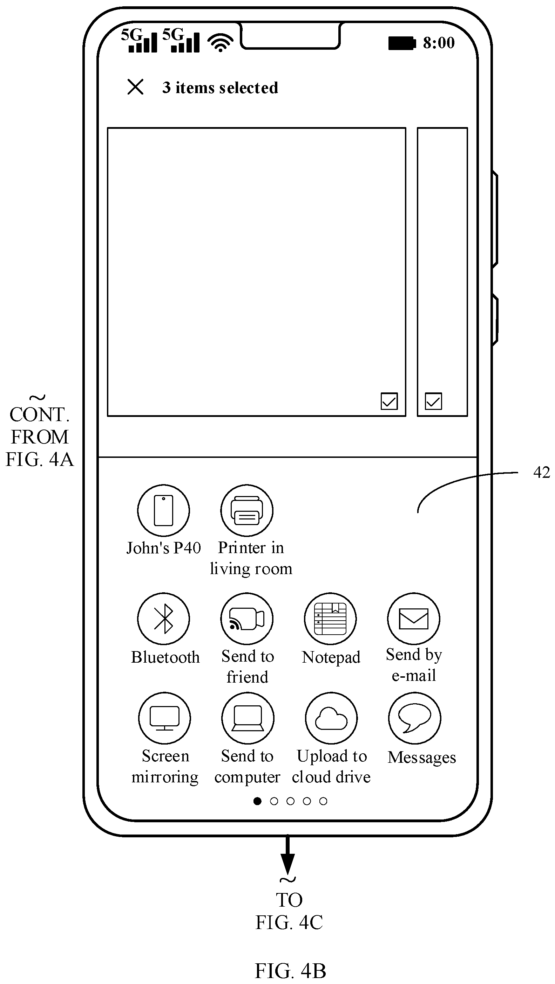

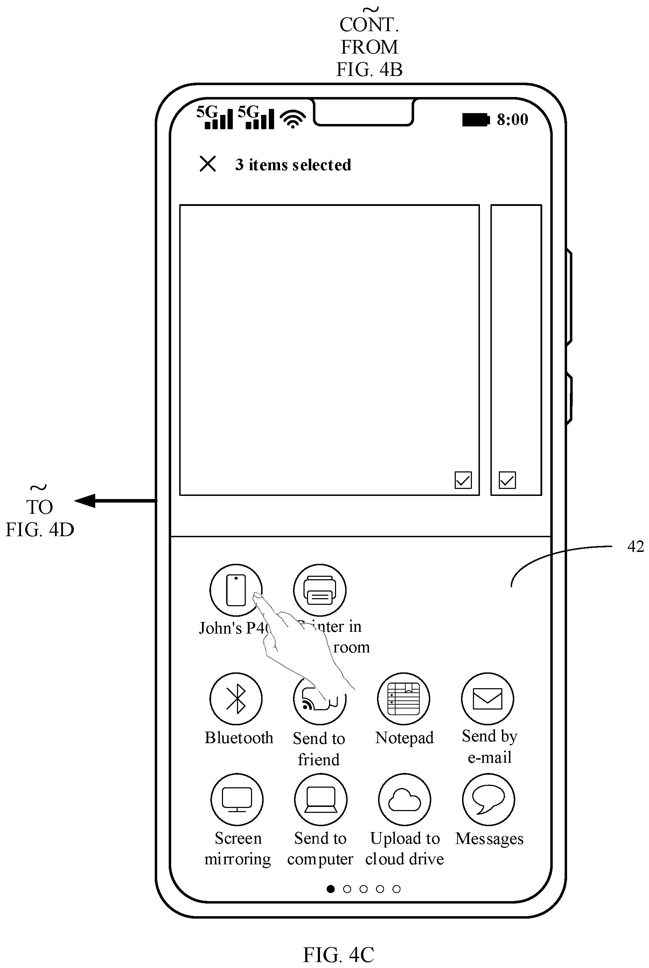

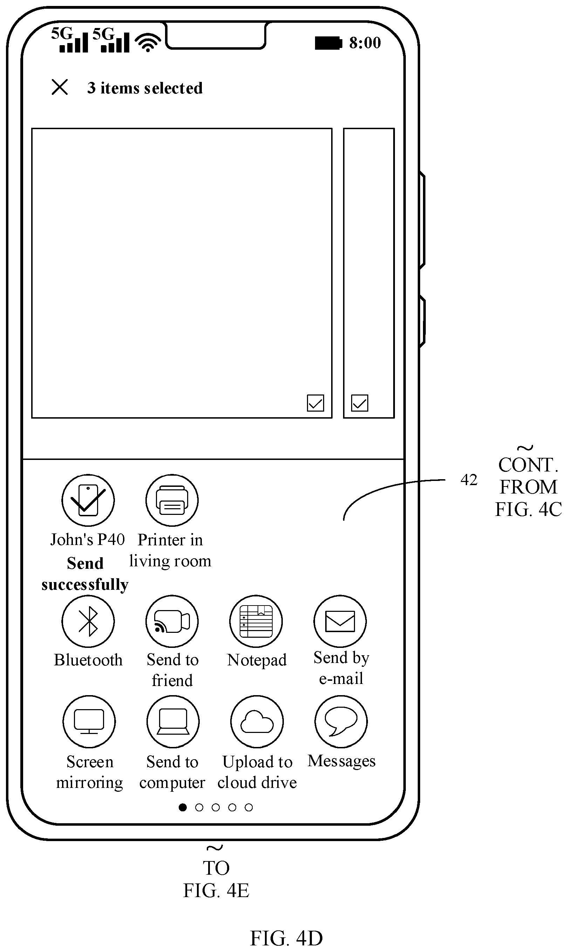

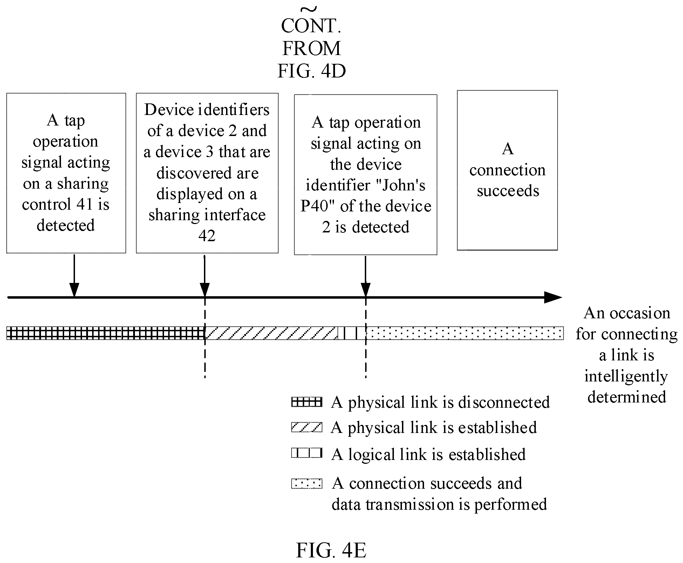

In an example, as shown in FIG. 4A to FIG. 4E, the to-be-shared data is three selected pictures. When detecting a tap operation signal (namely, a preset trigger signal) acting on a sharing control 41, a device 1 performs device discovery and displays a sharing interface 42 (in correspondence to the foregoing step 301). In a device discovery process, the device 1 sequentially displays, on the sharing interface 42, a device identifier "John's P40" of a discovered device 2 and a device identifier "printer in living room" of a device 3, and the device 1 respectively establishes a physical link and a logical link with the discovered device 2 and device 3 (in correspondence to the foregoing step 302). When the device 1 detects a tap operation signal (namely, a selection signal) acting on the device identifier "John's P40" of the device 2, the device 1 sends the three selected pictures to the device 2 (in correspondence to the foregoing step 303). After completing sending the three pictures, the device 1 displays prompt information "send successfully" on the sharing interface 42.

In conclusion, the first device performs device discovery when detecting the preset trigger signal acting on the to-be-shared data. The first device establishes the physical links with the n second devices, to avoid a case, in a related technology, in which device power consumption is high because a connection between devices is constantly maintained, ensure low device power consumption, and prolong standby duration of the device. In addition, the first device has established the physical links with the n second devices before the target device is selected for data transmission. This avoids a case, in a related technology, in which a connection delay is high because the connection between devices is started only when a device is selected for data transmission, reduces the connection delay between devices, and improves data sharing efficiency.

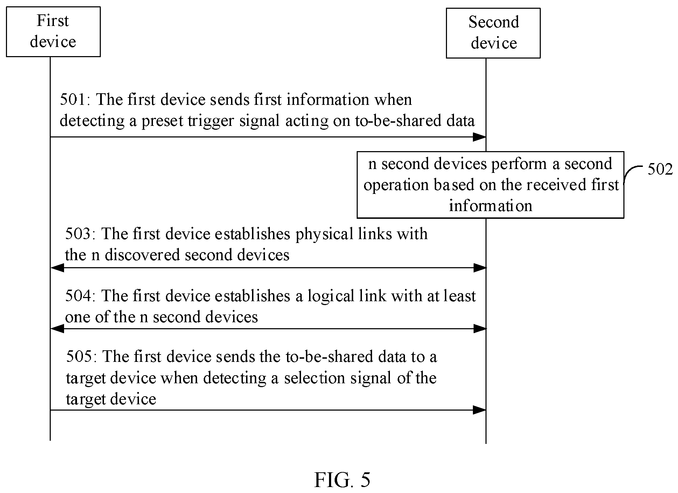

FIG. 5 is a flowchart of a data transmission method according to another example embodiment of this application. In this embodiment, an example in which the method is applied to a data transmission system including a first device and n second devices is used for description. The method includes the following steps.

Step 501: The first device sends first information when detecting a preset trigger signal acting on to-be-shared data.

Optionally, when the first device detects the preset trigger signal acting on the to-be-shared data, the first device determines whether a Wi-Fi direct connection function of the first device is enabled. If the Wi-Fi direct connection function of the first device is not enabled, the Wi-Fi direct connection function is enabled, and the first information is sent. If the Wi-Fi direct connection function of the first device is enabled, the first information is sent.

It should be noted that the step of enabling the Wi-Fi direct connection function by the first device may be performed before the step of sending the first information, may be performed after the step of sending the first information, or may be performed in parallel. This is not limited in this embodiment of this application.

Optionally, the first information is first broadcast information. The first device sends the first broadcast information in a preset broadcast manner, where the preset broadcast manner is a broadcast manner other than the Wi-Fi direct connection function. For example, the preset broadcast manner includes any one of Bluetooth (Bluetooth, BT) broadcast, Bluetooth low energy (Bluetooth Low Energy, BLE) broadcast, ultra wide band (Ultra Wide Band, UWB) broadcast, Wi-Fi broadcast, and near field communication (near field communication, NFC) broadcast. This is not limited in this embodiment of this application.

In a possible implementation, the first information indicates the second device to enable the Wi-Fi direct connection function.

In another possible implementation, the first information carries a specified identifier, and the specified identifier indicates the second device to enable the Wi-Fi direct connection function. For example, the specified identifier is 1. This is not limited in this embodiment of this application.

Optionally, the first information includes a device identifier of the first device, first status information, and first device information. The device identifier of the first device is used to uniquely identify the first device in a plurality of devices, and the first status information indicates that a device status of the first device is a state in which the Wi-Fi direct connection function is enabled and device discovery is performed.

The first device information indicates attribute information of the first device. Optionally, the first device information includes at least one of information about a logged-in account on the first device, a device type of the first device, a device model, and a device identifier. This is not limited in this embodiment of this application.

Step 502: The n second devices perform a second operation based on the received first information.

Optionally, that the n second devices perform a second operation based on the received first information includes: For any one of the n second devices, after receiving the first information sent by the first device, the second device determines whether the Wi-Fi direct connection function of the second device is enabled. If the Wi-Fi direct connection function of the second device is not enabled, the second device enables the Wi-Fi direct connection function. If the Wi-Fi direct connection function of the second device is enabled, subsequent step 503 is performed.

Optionally, the second device enables the Wi-Fi direct connection function, and feeds back response information to the first device. Correspondingly, the first device receives the response information fed back by the second device.

Optionally, before determining whether the Wi-Fi direct connection function of the second device is enabled, the second device determines whether to respond to the first information. For example, after receiving the first information sent by the first device, the second device determines whether a third preset condition is met. If the third preset condition is met, the second device determines whether the Wi-Fi direct connection function of the second device is enabled, and performs a subsequent response step. If the third preset condition is not met, the first information is ignored.

For example, the third preset condition includes that the second device supports the Wi-Fi direct connection function, and the second device currently does not perform data transmission with another device. This is not limited in this embodiment of this application.

Step 503: The first device establishes physical links with the n discovered second devices.

A physical connection between the first device and the second device may be actively established by the first device, or may be actively established by the second device.

Optionally, for any one of the n second devices, the second device establishes a physical link with the first device based on the received first information.

Optionally, the second device feeds back the response information based on the received first information, and establishes the physical link with the first device.

It should be noted that, the step of feeding back the response information by the second device may not be performed, or may be performed simultaneously with, or before or after the step of establishing the physical link with the first device. This is not limited in this embodiment of this application.

After receiving the first information sent by the first device, the second device may directly establish the physical link with the first device, or may establish the physical link with the first device based on connection information.

For example, the second device feeds back the response information to the first device. If the first device allows the second device to establish the physical link, the first device sends the connection information to the second device, and the second device establishes the physical link with the first device based on the received connection information.

Optionally, the connection information includes frequency information and/or a Wi-Fi media access control (Media Access Control, MAC) address of the first device. The frequency information indicates a frequency used for data transmission. For example, the frequency information is 160 MHz. This is not limited in this embodiment of this application.

The wireless MAC address of the first device is sent by the first device. The frequency information may be preset, or may be sent by the first device.

Optionally, for any one of the n second devices, the second device feeds back the response information based on the received first information. After receiving the response information fed back by the second device, the first device establishes the physical link with the second device.

Optionally, the response information sent by the n second devices is received by the first device within a preset time period, and the preset time period is a preset time interval starting from a moment at which the first device sends the first information, for example, the preset time period is 1 second.

Optionally, the response information includes a device identifier of the second device, second status information, and second device information. The device identifier of the second device is used to uniquely identify the second device in a plurality of devices, and the second status information indicates that a device status of the second device is a state in which the Wi-Fi direct connection function is enabled and the second device is waiting for a connection. The second device information indicates attribute information of the second device. For example, the second device information includes information about a logged-in account on the second device. This is not limited in this embodiment of this application.

In a possible implementation, the foregoing step 501, step 502, and step 503 may be replaced with the following steps: The first device sends first information when detecting a preset trigger signal acting on to-be-shared data, and the first device establishes physical links with the n discovered second devices, where the first device and the n second devices are devices that have enabled the Wi-Fi direct connection function. It should be noted that, for related details of each step, refer to related descriptions in the foregoing embodiment, and details are not described herein again. Step 504: The first device establishes a logical link with at least one of the n second devices.

Optionally, the first device sorts the n second devices according to a first preset rule, and establishes logical links with first m sorted second devices, where m is a positive integer less than n.

Optionally, the first device sorts the n second devices according to the first preset rule and device information respectively corresponding to the n second devices. The second device information indicates the attribute information of the second device.

For example, the second device information includes at least one of a historical connection quantity between the second device and the first device, a distance between the second device and the first device, a historical connection moment between the second device and the first device, a historical quantity of usage times of the Wi-Fi direct connection function by the second device, a device type of the second device, and service information corresponding to the second device. This is not limited in this embodiment of this application.

Optionally, the first preset rule indicates that a sorting sequence of the second device is related to an estimated probability that the second device is selected. For example, the sorting sequence of the second device is in a negative correlation relationship with the estimated probability that the second device is selected. To be specific, a higher estimated probability that one of the n second devices is selected indicates that a sorting sequence of the second device is closer to the front, and a sorting sequence number of the second device is smaller.

Optionally, the first preset rule includes at least one of a least recently used (Least Recently Used, LRU) rule (that is, a sequence of the historical connection quantities from greatest to least), a sequence of the historical connection moments from nearest to farthest, a sequence of the distances from nearest to farthest, a sequence of the historical quantities of usage times from greatest to least, and a sequence of matching degrees between the device types and/or the service information and a data transmission service of the first device from highest to lowest.

That the first device sorts the n second devices according to the first preset rule and device information respectively corresponding to the n second devices includes but is not limited to the following possible implementations:

In a possible implementation, the first device sorts the n second devices in the sequence of the historical connection quantities of the n second devices from greatest to least. The historical connection quantity of the second device is a quantity of times the second device was connected to the first device in a historical preset time period.

In another possible implementation, the first device sorts the n second devices in the sequence of the distances between the n second devices and the first device from nearest to farthest.

In another possible implementation, the first device sorts the n second devices in the sequence of the historical connection moments of the n second devices from nearest to farthest. The historical connection moment of the second device is a historical moment at which the second device was last connected with the first device.

In another possible implementation, the first device sorts the n second devices in the sequence of the historical quantities of usage times of the n second devices from greatest to least. The historical quantity of usage times of the second device is the historical quantity of usage times of the Wi-Fi direct connection function by the second device.

In another possible implementation, the first device sorts the n second devices in the sequence of the matching degrees between the device types and/or the service information of the n second devices and the data transmission service of the first device from highest to lowest.

The device type of the second device indicates a type, of electronic device, to which the second device belongs. Optionally, the device type includes one of a terminal device and an Internet of Things (Internet of Things, IoT) device, and the IoT device is a device connected to the IoT. For example, the terminal device is a mobile phone, and the IoT device is a printer. A manner of setting the device type is not limited in this embodiment of this application.

The service information of the second device indicates a service supported by the second device. For example, if the second device is a printer, the service information of the second device may indicate that the second device supports a data transmission service and a printing service. A manner of setting the service information is not limited in this embodiment of this application.

It should be noted that the foregoing possible implementations may be implemented separately, may be implemented in combination with each other, may be implemented by combining any three possible implementations, may be implemented by combining any four possible implementations, or may be implemented by combining all five possible implementations. This is not limited in this embodiment of this application.

For one of the n second devices, after the first device completes establishing the physical link with the second device, that the first device established the logical link with the second device includes: The first device establishes the logical link with the second device based on an IP address of the second device. Alternatively, the first device establishes the logical link with the second device based on the IP address and a port number of the second device. The port number may be preset, or may be sent by the second device.

Step 505: The first device sends the to-be-shared data to a target device when detecting a selection signal of the target device.

Optionally, after receiving the response information sent by the n second devices, the first device displays a device identifier list, where the device identifier list includes device identifiers respectively corresponding to the n second devices. When the first device receives a selection operation signal acting on the device identifier in the device identifier list, it indicates that the first device detects a selection signal of a second device, namely, the target device, corresponding to the device identifier. The first device determines whether the target device meets a first preset condition, where the first preset condition includes that the physical link and the logical link are established between the first device and the target device.

Optionally, when the first device detects that the target device meets the first preset condition, it indicates that the physical link and the logical link are established between the first device and the target device, and the first device directly sends the to-be-shared data to the target device.

Optionally, when the first device detects that the target device does not meet the first preset condition, it indicates that the physical link is established between the first device and the target device but no logical link is established between the first device and the target device. In this case, the first device establishes the logical link with the target device, and after the logical link is successfully established, the first device sends the to-be-shared data to the target device.

In this embodiment of this application, the n second devices may determine an occasion for establishing and disconnecting the physical link and/or the logical link with the first device. Optionally, for at least one of the n second devices, countdown is started after the first information is received. After the countdown times out, the at least one second device disables the Wi-Fi direct connection function or enters a low power consumption state.

That the second device disables the Wi-Fi direct connection function includes: The second device disconnects the physical link and the logical link with the first device. That the second device enters a low power consumption state includes: The second device disconnects the logical link with the first device but maintains the physical link with the first device.

Optionally, the low power consumption state is a state in which only data is received but no data is sent, or the low power consumption state is a state in which switching is periodically performed between a sleep mode and a wake-up mode. In the sleep mode, the second device does not receive data or send data, and in the wake-up mode, the second device only receives data but does not send data. For example, duration of the sleep mode is greater than duration of the wake-up mode. A manner of setting the low power consumption state is not limited in this embodiment of this application.

Optionally, the second device stops the countdown after establishing the logical link with the first device.

Optionally, for each second device, the second device obtains the response information that is sent by other n-1 second devices to the first device, where the response information includes the second device information. The second device sorts, according to a second preset rule, the n second devices based on the second device information respectively corresponding to the n second devices (that is, device information of the second device and device information respectively corresponding to the other n-1 second devices), and determines countdown duration of the second device based on a sorting result.

Optionally, that the second device determines countdown duration of the second device based on a sorting result includes: if the second device is located in the first k sorted devices, determining that the countdown duration of the second device is a first duration threshold; or if the second device is not located in the first k sorted devices, determining that the countdown duration of the second device is a second duration threshold, where the first duration threshold is greater than or equal to the second duration threshold, and k is a positive integer less than n. This is not limited in this embodiment of this application.

Optionally, countdown duration of a second device that has established the logical link is greater than or equal to countdown duration of a second device that has not established the logical link.

Optionally, the first device sends second information when detecting the selection signal of the target device. The second devices except the target device disable the Wi-Fi direct connection function or enter the low power consumption state based on the received second information.

The second information indicates that the first device is performing data transmission with the target device.

Optionally, the first device sends third information after the data transmission with the target device ends. The n second devices except the target device enable the Wi-Fi direct connection function based on the received third information.

Optionally, the first device displays the device identifier list after the data transmission with the target device ends, and sends the third information, where the third information indicates that the data transmission between the first device and the target device ends. For any one of the n second devices except the target device, the second device enables the Wi-Fi direct connection function based on the received third information. After the second device enables the Wi-Fi direct connection function, the first device establishes again the physical link with the second device, or the first device establishes again the physical link and the logical link with the second device. The first device performs again the step of sending, when detecting a selection signal of one of the second devices, the to-be-shared data to the second device.

Optionally, after the data transmission between the first device and the target device ends, the target device disables the Wi-Fi direct connection function, or keeps the state in which the Wi-Fi direct connection function is enabled unchanged.

It should be noted that, for a process in which the first device establishes again the physical link and the logical link with the second device, and the first device performs again the step of sending, when detecting the selection signal of one of the second devices, the to-be-shared data to the second device, refer to the description of the foregoing related steps, and details are not described herein again.

Optionally, the first device sends fourth information after a broadcast service ends. The n second devices disable the Wi-Fi direct connection function or enter the low power consumption state based on the received fourth information. The fourth information indicates that the broadcast service of the first device ends.

It should be noted that the second information, the third information, and the fourth information in this embodiment of this application may be broadcast information, and are sent in the preset broadcast manner. For a process of sending the second information, the third information, or the fourth information in the preset broadcast manner, refer to related details of sending the first information in the preset broadcast manner. Details are not described herein again.

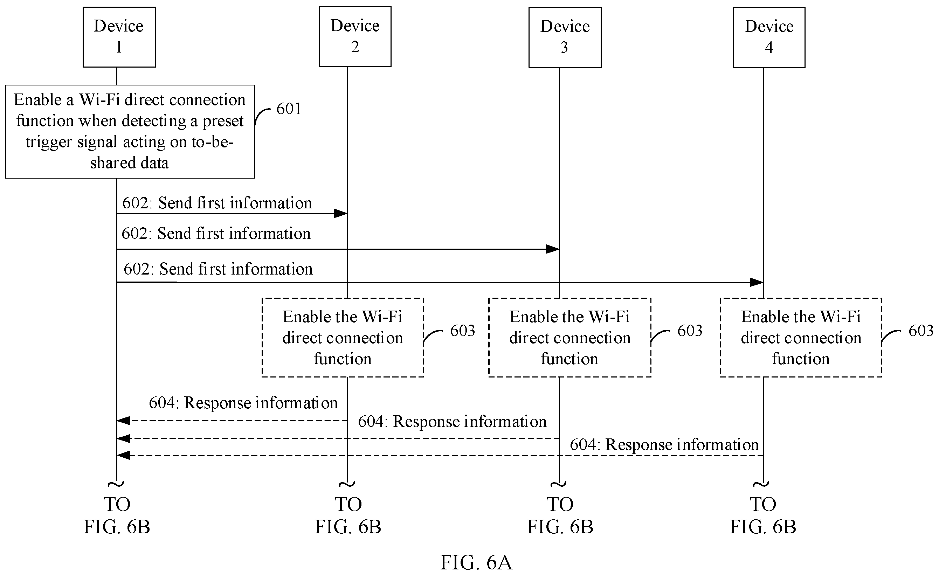

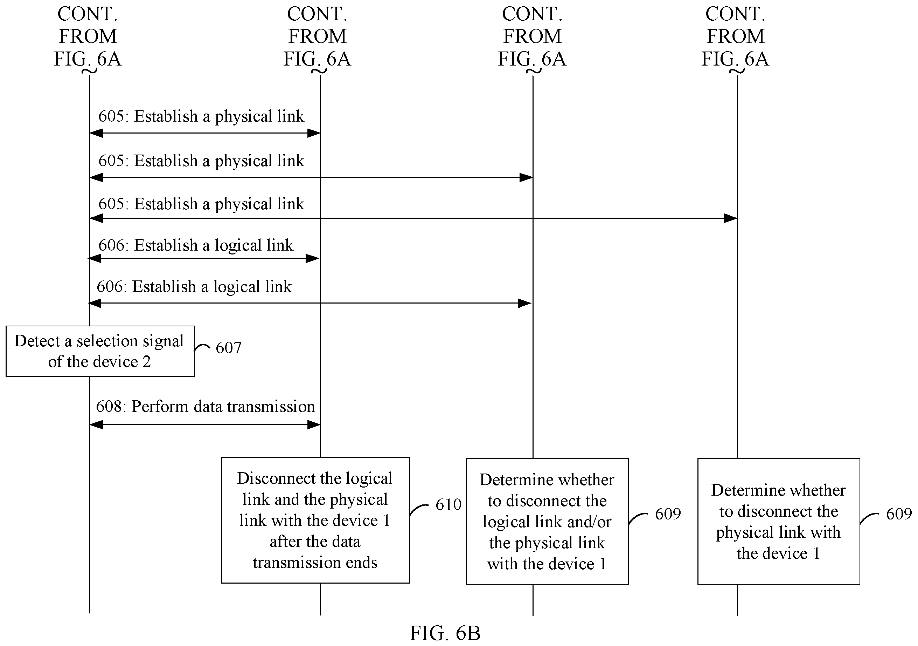

In an example, the first device is a device 1, the n second devices include a device 2, a device 3, and a device 4, the target device is the device 2, and a data transmission method includes the following steps as shown in FIG. 6A and FIG. 6B. Step 601: The device 1 enables a Wi-Fi direct connection function when detecting a preset trigger signal acting on to-be-shared data. Step 602: The device 1 sends first information in a BLE broadcast manner. Step 603: The device 2, the device 3, and the device 4 enable the Wi-Fi direct connection function based on the received first information. Step 604: The device 2, the device 3, and the device 4 feed back response information to the device 1. Step 605: The device 1 separately establishes physical links with the device 2, the device 3, and the device 4. Step 606: The device 1 sorts the device 2, the device 3, and the device 4 according to a first preset rule, and establishes logical links with the first two sorted devices (the device 2 and the device 3). Step 607: The device 1 detects a selection signal of the device 2. Step 608: The device 1 performs data transmission with the device 2 (including sending, by the device 1, the to-be-shared data to the device 2). Step 609: The device 3 determines whether to disconnect the logical link and/or the physical link with the device 1, and the device 4 determines whether to disconnect the physical link with the device 1. Step 610: After the data transmission between the device 1 and the device 2 ends, the device 2 disconnects the logical link and the physical link with the device 1.

It should be noted that step 605 may be performed before step 604, or may be performed after step 604, or may be performed in parallel with step 604. Step 609 may be performed before step 607 and step 608, or may be performed after step 607 and step 608, or may be performed in parallel with step 607 and step 608. In addition, for related details of the steps in the foregoing example, refer to related descriptions in the foregoing embodiment. Details are not described herein again.

It should be noted that, in a possible implementation, the device status of the electronic device includes but is not limited to the following several possible states.

Optionally, the device status of the first device includes a first primary state, a second primary state, a third primary state, and a fourth primary state.

The first primary state is a state in which the Wi-Fi direct connection function is disabled. In this state, neither the physical link nor the logical link is established between the first device and each second device.

The second primary state is a state in which the Wi-Fi direct connection function is enabled and device discovery is performed. In this state, the first device discovers the surrounding second device, establishes the physical link with the n discovered second devices, and selects m second devices of the n second devices to establish the logical links, where n is greater than one, and m is a positive integer less than or equal to n.

The third primary state is a state of waiting for a user to select the target device. In this state, the physical links are established between the first device and the n second devices, and the logical links are further established between the first device and the m second devices of the n second devices.

The fourth primary state is a data transmission state, that is, a state in which the first device is performing data transmission with the target device. In this state, the physical link and the logical link are established between the first device and the target device.

Optionally, the device status of the second device includes a first secondary state, a second secondary state, a third secondary state, a fourth secondary state, and a fifth secondary state.

The first secondary state is a state in which the Wi-Fi direct connection function is disabled. In this state, neither the physical link nor the logical link is established between the second device and the first device.

The second secondary state is a state in which the Wi-Fi direct connection function is enabled and the second device is waiting for a connection. In this state, the second device waits for the first device to establish the physical link and/or the logical link.

The third secondary state is a state of waiting for data transmission, that is, a state in which the second device is waiting for the first device to send data. In this state, the physical link and the logical link are established between the second device and the first device.

The fourth secondary state is a data transmission state, that is, a state in which the target device is performing data transmission with the first device. In this state, the physical link and the logical link are established between the target device and the first device.

The fifth secondary state is a state in which the Wi-Fi direct connection function is disabled or the low power consumption state. In the low power consumption state, the physical link is established between the second device and the first device, but no logical link is established.

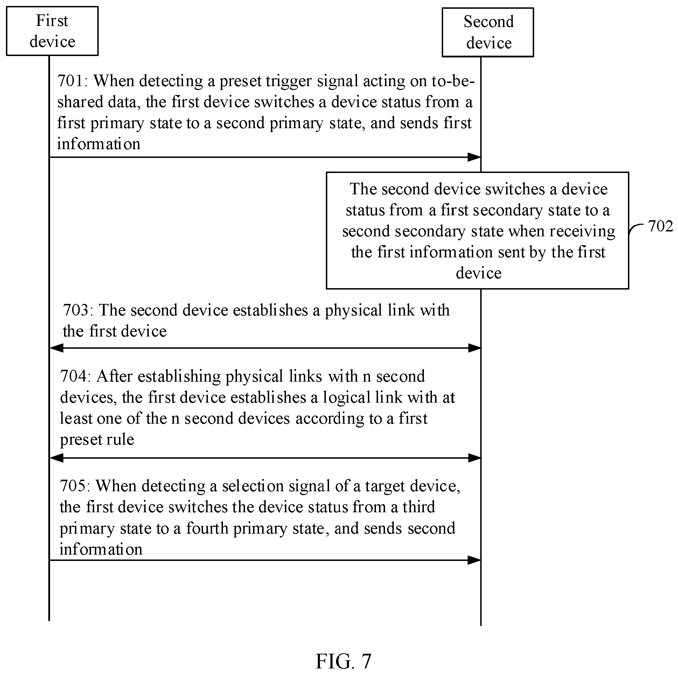

Based on the device status described above, FIG. 7 is a flowchart of a data transmission method according to another example embodiment of this application. In this embodiment, an example in which the method is applied to a data transmission system including a first device and n second devices is used for description. The method includes the following steps.

Step 701: When detecting a preset trigger signal acting on to-be-shared data, the first device switches a device status from a first primary state to a second primary state, and sends first information.

The first information indicates that the device status of the first device is the second primary state. The first primary state is a state in which a Wi-Fi direct connection function is disabled, and the second primary state is a state in which the Wi-Fi direct connection function is enabled and device discovery is performed.

Step 702: The second device switches a device status from a first secondary state to a second secondary state when receiving the first information sent by the first device.

Only an example in which the second device is a device that supports the Wi-Fi direct connection function and currently does not perform data transmission with another device is used. For each second device, the second device switches the device status from the first secondary state to the second secondary state when receiving the first information sent by the first device. Response information indicates that the device status of the second device is the second secondary state. The first secondary state is a state in which the Wi-Fi direct connection function is disabled, and the second secondary state is a state in which the Wi-Fi direct connection function is enabled and the second device is waiting for a connection.

Optionally, the second device switches the device status from the first secondary state to the second secondary state, and feeds back the response information to the first device.

Step 703: The second device establishes a physical link with the first device.

Step 704: After establishing physical links with the n second devices, the first device establishes a logical link with at least one of the n second devices according to a first preset rule.

It should be noted that, for a process in which the first device establishes the logical link with the at least one of the n second devices according to the first preset rule, refer to related details in the foregoing embodiment. Details are not described herein again.

Optionally, for each second device, the second device starts countdown after receiving the first information sent by the first device. After the countdown times out, the second device disables the Wi-Fi direct connection function or enters a low power consumption state, that is, sets the device status of the second device to a fifth secondary state.

Optionally, after the logical link is successfully established, the first device switches the device status from the second primary state to a third primary state, where the third primary state is a state of waiting for a user to select a target device. The second device that has established the logical link stops the countdown, and switches the device status from the second secondary state to a third secondary state, where the third secondary state is a state of waiting for data transmission.

Step 705: When detecting a selection signal of the target device, the first device switches the device status from the third primary state to a fourth primary state, and sends second information.

When detecting the selection signal of the target device, the first device switches the device status from the third primary state to the fourth primary state, performs data transmission with the target device, and sends the second information. The second information indicates that the device status of the first device is the fourth primary state. The fourth primary state is a data transmission state, and indicates that the first device is performing data transmission with the target device.

Correspondingly, the target device receives the data, and switches the device status from the third secondary state to a fourth secondary state, where the fourth secondary state is a data transmission state.

Optionally, after receiving the second information, the second devices except the target device disables the Wi-Fi direct connection function or enters the low power consumption state, that is, sets the device status to a fifth secondary state.

After the data transmission with the target device ends, the first device displays a device identifier list, switches the device status from the fourth primary state to the second primary state, and sends third information. The third information indicates that the data transmission between the first device and the target device ends. After receiving the third information, each second device resets the device status to the second secondary state, and waits for a connection of the first device.

Optionally, after a broadcast service ends, the first device sets the device status to the first primary state, and sends fourth information. The fourth information indicates that the broadcast service of the first device ends. After receiving the fourth information, the second device resets the device status to the fifth secondary state.

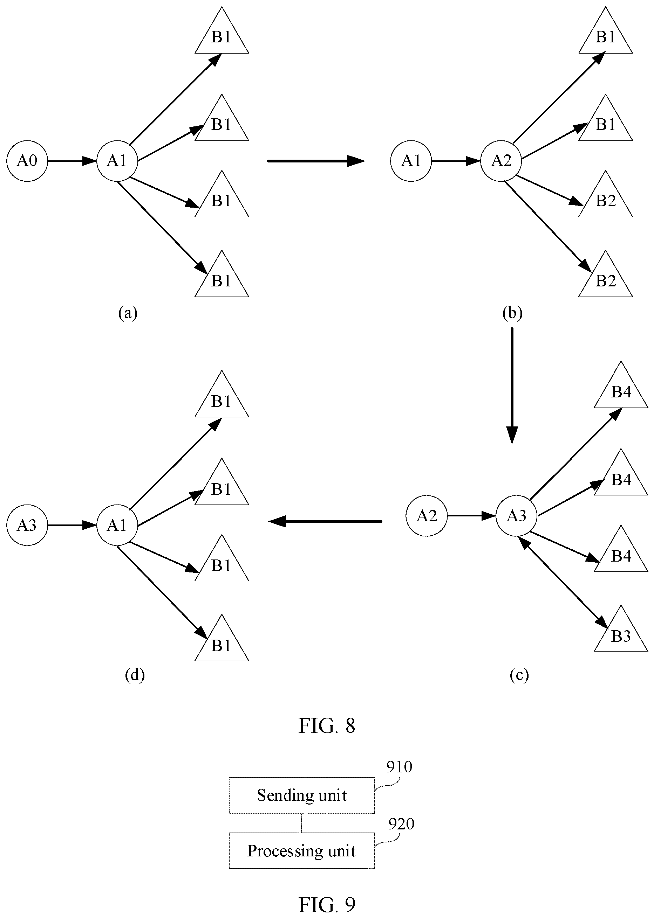

In an example, the first primary state is a state A0, the second primary state is a state A1, the third primary state is a state A2, the fourth primary state is a state A3, the first secondary state is a state B0, the second secondary state is a state B1, the third secondary state is a state B2, the fourth secondary state is a state B3, and the fifth secondary state is a state B4. A scenario in which a user discovers, by using a device A, a plurality of surrounding devices B that meet a condition, and selects a device C from the devices B for data transmission is used as an example. As shown in (a) in FIG. 8, when detecting a preset trigger signal acting on to-be-shared data, the device A discovers the surrounding device by using BLE broadcast, and enables a Wi-Fi direct connection function of the device A (the state A1), and the surrounding devices B (for example, four devices B) that meet the condition respond to existence of the device A by using the BLE broadcast, and enable Wi-Fi direct connection functions of the devices B (the state B1). The four devices B start countdown after entering a state of waiting for a connection (the state B1), and, after the countdown times out, disable the Wi-Fi direct connection functions of the four devices B or enter a low power consumption state (the state B4).

As shown in (b) in FIG. 8, the device A receives, within a preset time period (for example, 1s), response information sent by each of the four devices B, and establishes physical links with the four devices B. The device A sorts the four devices B, and selects two of the four devices B for a pre-connection, that is, establishing a logical link. The two devices B that establish the logical link stop the countdown and enter a state of waiting for data transmission (the state B2), and the device A enters a state of waiting for a user to select a target device (the state A2).

As shown in (c) in FIG. 8, when the device A detects a selection signal of the device C, the device A and the device C perform data transmission, the device A enters a data transmission state (the state A3), and the device C enters a data transmission state (the state B3). The device A sends information indicating that data transmission is being performed. After receiving the information, the three devices B other than the device C disable the Wi-Fi direct connection functions of the three devices B or enter the low power consumption state (the state B4).

As shown in (d) in FIG. 8, after the data transmission ends, the device A re-enters the state of performing device discovery (the state A1), and the four surrounding devices B re-enter the state B1 and re-perform the foregoing steps. After the countdown times out, or when receiving the information indicating that the device A is performing data transmission with another device, or when receiving information indicating that a broadcast service of the first device ends, each device B disables the Wi-Fi direct connection function of each device B or enters the low power consumption state (the state B4).

In conclusion, in this embodiment of this application, after the data transmission starts, the first device further sends the second information to notify the second devices except the target device to disable the Wi-Fi direct connection function or enter the low power consumption state, to reduce device power consumption of the second devices except the target device.

In this embodiment of this application, after the data transmission ends, the first device further re-displays the device identifier list, and sends the third information to notify the surrounding second device to enable the Wi-Fi direct connection function and wait for the connection, to further reduce a connection delay between devices and improve data sharing efficiency.

In this embodiment of this application, the second device further starts the countdown after receiving the first information sent by the first device, and, after the countdown times out, disables the Wi-Fi direct connection function or enters the low power consumption state, so that the second device can intelligently determine whether to disconnect the physical link and/or the logical link with the first device, to avoid unnecessary device power consumption.

The following provides an apparatus embodiment of this application that may be used to perform the method embodiments of this application. For details not disclosed in the apparatus embodiment of this application, refer to the method embodiments of this application.

FIG. 9 is a block diagram of a data transmission apparatus according to an example embodiment of this application. The apparatus may be implemented, by using software, hardware, or a combination thereof, as all or a part of the electronic device provided in FIG. 2. The apparatus may include: a sending unit 910 and a processing unit 920.

A sending unit 910 is configured to: perform device discovery when detecting a preset trigger signal acting on to-be-shared data.

A processing unit 920 is configured to establish physical links with n discovered second devices, where Wi-Fi direct connection functions of a first device and the n second devices are enabled, and for each of the n discovered second devices, the establishing a physical link comprises exchanging physical layer capability information and performing IP address allocation and information exchange.

The sending unit 910 is further configured to: send the to-be-shared data to a target device when detecting a selection signal of the target device, where the target device is one of the n second devices.

In a possible implementation, the sending unit 910 is further configured to:
send first information when detecting a preset trigger signal acting on the to-be-shared data, where
for any one of the n second devices, a physical link between the second device and the first device is established by the second device based on the received first information, or is established by the first device after the first device receives response information fed back by the second device.

In another possible implementation, the processing unit 920 is further configured to establish a logical link with at least one of the n second devices.

The sending unit 910 is further configured to: send the to-be-shared data to the target device when the selection signal of the target device is detected and the target device meets a first preset condition, where
the first preset condition includes that the physical link and the logical link are established between the first device and the target device.

In another possible implementation, the processing unit 920 is further configured to: establish the logical link with the target device when the selection signal of the target device is detected and the target device does not meet the first preset condition.

The sending unit 910 is further configured to: after the logical link is successfully established, send, by the first device, the to-be-shared data to the target device.

In another possible implementation, the processing unit 920 is further configured to:
sort the n second devices according to a first preset rule; and
establish logical links with first m sorted second devices, where m is a positive integer less than n; and
the first preset rule indicates that a sorting sequence of the second device is related to an estimated probability that the second device is selected.

In another possible implementation, the first information further indicates the at least one of the n second devices to: start countdown after the at least one second device receives the first information; and after the countdown times out, disable the Wi-Fi direct connection function or enter a low power consumption state.

In another possible implementation, the sending unit 910 is further configured to: send second information when detecting the selection signal of the target device, where the second information indicates the second devices except the target device to disable the Wi-Fi direct connection function or enter the low power consumption state.

In another possible implementation, the sending unit 910 is further configured to: send third information after data transmission with the target device ends, where the third information indicates the n second devices except the target device to enable the Wi-Fi direct connection function.

In another possible implementation, the sending unit 910 is further configured to: send fourth information after a broadcast service ends, where the fourth information indicates the n second devices to disable the Wi-Fi direct connection function or enter the low power consumption state.

It should be noted that, when the apparatus provided in the foregoing embodiments implements the functions of the apparatus, division of the foregoing function modules is only used as an example for description. In actual application, the foregoing functions may be allocated to different function modules for implementation as required, that is, an inner structure of a device is divided into different function modules, to implement all or some of the functions described above. In addition, the apparatuses provided in the foregoing embodiments and the method embodiments pertain to a same concept. For a specific implementation process of the apparatuses, refer to the method embodiments. Details are not described herein again.

An embodiment of this application provides an electronic device. The electronic device includes a processor and a memory configured to store instructions that may be executed by the processor, where the processor is configured to implement the method performed by a first device or a second device in the foregoing embodiments when executing the instructions.

An embodiment of this application provides a computer program product, and the computer program product includes computer-readable code or a non-volatile computer-readable storage medium carrying the computer-readable code. When the computer-readable code runs in a processor of an electronic device, the processor in the electronic device performs the method performed by a first device or a second device in the foregoing embodiments.

An embodiment of this application provides a data transmission system. The data transmission system includes a first device and n second devices. The first device performs the method performed by a first device in the foregoing embodiments, and the second device performs the method performed by a second device in the foregoing embodiments.

An embodiment of this application provides a non-volatile computer-readable storage medium. The non-volatile computer-readable storage medium stores computer program instructions. When the computer program instructions are executed by a processor, the method performed by a first device or a second device in the foregoing embodiments is implemented.

The computer-readable storage medium can be a tangible device that can retain and store instructions for use by an instruction execution device. The computer-readable storage medium may be, for example, but is not limited to an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only-Memory, EPROM, or flash memory), a static random-access memory (Static Random-Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium or to an external computer or external storage device via a network, such as the Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer through any type of network, including a local area network (Local Area Network, LAN) or a wide area network (Wide Area Network, WAN), or may be connected to an external computer (for example, through the Internet by using an Internet service provider). In some embodiments, an electronic circuit, for example, a programmable logic circuit, a field programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may be executed substantially in parallel, and may sometimes be executed in a reverse order, depending on a function involved.

It should also be noted that each block in the block diagram and/or the flowchart, and a combination of blocks in the block diagram and/or the flowchart may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. A data transmission method, applied to a first device, wherein the method comprises:
performing (301) device discovery when detecting a preset trigger signal acting on to-be-shared data;
establishing (302, 503, 605) physical links with n discovered second devices, wherein Wi-Fi direct connection functions of the first device and the n second devices are enabled, n is greater than one, and for each of the n discovered second devices, the establishing a physical link comprises exchanging physical layer capability information and performing IP address allocation and information exchange; and
sending (303, 505, 608) the to-be-shared data to a target device when detecting (607) a selection signal of the target device, wherein the target device is one of the n second devices.

2. The method according to claim 1, wherein the performing device discovery when detecting a preset trigger signal acting on to-be-shared data comprises:
sending (501, 602) first information when detecting the preset trigger signal acting on the to-be-shared data, wherein
for any one of the n second devices, a physical link between the second device and the first device is established by the second device based on the received first information, or is established by the first device after the first device receives response information fed back by the second device.

3. The method according to claim 2, wherein after the establishing (302, 503, 605) physical links with n discovered second devices, the method further comprises:
establishing (504, 606) a logical link with at least one of the n second devices; and
the sending (303, 505, 608) the to-be-shared data to a target device when detecting a selection signal of the target device comprises:
sending the to-be-shared data to the target device when the selection signal of the target device is detected and the target device meets a first preset condition, wherein
the first preset condition comprises that the physical link and the logical link are established between the first device and the target device.

4. The method according to claim 3, wherein the method further comprises:
establishing the logical link with the target device when the selection signal of the target device is detected and the target device does not meet the first preset condition; and
sending, by the first device, the to-be-shared data to the target device after the logical link is successfully established.

5. The method according to claim 3, wherein the establishing (504, 606) a logical link with at least one of the n second devices comprises:
sorting the n second devices according to a first preset rule; and
establishing logical links with first m sorted second devices, wherein m is a positive integer less than n, and
the first preset rule indicates that a sorting sequence of the second device is related to an estimated probability that the second device is selected.

6. The method according to any one of claims 2 to 5, wherein the first information further indicates the at least one of the n second devices to: start countdown after the at least one second device receives the first information; and after the countdown times out, disable the Wi-Fi direct connection function or enter a low power consumption state.

7. The method according to any one of claims 1 to 6, wherein the method further comprises:
sending second information when detecting the selection signal of the target device, wherein the second information indicates the second devices except the target device to disable the Wi-Fi direct connection function or enter the low power consumption state.

8. The method according to claim 6 or 7, wherein the method further comprises:
sending third information after data transmission with the target device ends, wherein the third information indicates the n second devices except the target device to enable the Wi-Fi direct connection function.

9. The method according to any one of claims 1 to 8, wherein the method further comprises:
sending fourth information after a broadcast service ends, wherein the fourth information indicates the n second devices to disable the Wi-Fi direct connection function or enter the low power consumption state.

10. An electronic device, wherein the electronic device comprises:
a processor (10); and
a memory (20), configured to store instructions that can be executed by the processor (10), wherein
the processor is configured to implement the method according to any one of claims 1 to 9 when executing the instructions.

11. A non-volatile computer-readable storage medium, wherein the non-volatile computer-readable storage medium stores computer program instructions; and when the computer program instructions are executed by a processor, the method according to any one of claims 1 to 9 is implemented.

## Patentansprüche

1. Datenübertragungsverfahren, das auf eine erste Vorrichtung angewendet wird, wobei das Verfahren Folgendes umfasst:
Durchführen (301) einer Vorrichtungsermittlung, wenn ein voreingestelltes Auslösesignal, das auf gemeinsam zu nutzende Daten einwirkt, erkannt wird;
Herstellen (302, 503, 605) physischer Verbindungen mit n ermittelten zweiten Vorrichtungen, wobei Wi-Fi-Direct-Verbindungsfunktionen der ersten Vorrichtung und der n zweiten Vorrichtungen aktiviert sind, n größer als eins ist und für jede der n ermittelten zweiten Vorrichtungen das Herstellen einer physischen Verbindung Austauschen von Fähigkeitsinformationen einer physischen Schicht und Durchführen einer IP-Adresszuweisung und eines Informationsaustauschs umfasst; und
Senden (303, 505, 608) der gemeinsam zu nutzenden Daten an eine Zielvorrichtung, wenn ein Auswahlsignal der Zielvorrichtung erkannt wird (607), wobei die Zielvorrichtung eine der n zweiten Vorrichtungen ist.

2. Verfahren nach Anspruch 1, wobei das Durchführen einer Vorrichtungsermittlung, wenn ein voreingestelltes Auslösesignal, das auf gemeinsam zu nutzende Daten einwirkt, erkannt wird, Folgendes umfasst:
Senden (501, 602) erster Informationen wenn das voreingestellte Auslösesignal, das auf die gemeinsam zu nutzenden Daten einwirkt, erkannt wird, wobei
für jede beliebige eine der n zweiten Vorrichtungen eine physische Verbindung zwischen der zweiten Vorrichtung und der ersten Vorrichtung durch die zweite Vorrichtung basierend auf den empfangenen ersten Informationen hergestellt wird oder durch die erste Vorrichtung hergestellt wird, nachdem die erste Vorrichtung Antwortinformationen empfangen hat, die durch die zweite Vorrichtung zurückgesendet werden.

3. Verfahren nach Anspruch 2, wobei das Verfahren nach dem Herstellen (302, 503, 605) physischer Verbindungen mit n ermittelten zweiten Vorrichtungen ferner Folgendes umfasst:
Herstellen (504, 606) einer logischen Verbindung mit mindestens einer der n zweiten Vorrichtungen; und
das Senden (303, 505, 608) der gemeinsam zu nutzenden Daten an eine Zielvorrichtung, wenn ein Auswahlsignal der Zielvorrichtung erkannt wird, Folgendes umfasst:
Senden der gemeinsam zu nutzenden Daten an die Zielvorrichtung, wenn das Auswahlsignal der Zielvorrichtung erkannt wird und die Zielvorrichtung eine erste voreingestellte Bedingung erfüllt, wobei
die erste voreingestellte Bedingung umfasst, dass die physische Verbindung und die logische Verbindung zwischen der ersten Vorrichtung und der Zielvorrichtung hergestellt sind.

4. Verfahren nach Anspruch 3, wobei das Verfahren ferner Folgendes umfasst:
Herstellen der logischen Verbindung mit der Zielvorrichtung, wenn das Auswahlsignal der Zielvorrichtung erkannt wird und die Zielvorrichtung die erste voreingestellte Bedingung nicht erfüllt; und
Senden, durch die erste Vorrichtung, der gemeinsam zu nutzenden Daten, an die Zielvorrichtung, nachdem die logische Verbindung erfolgreich hergestellt wurde.

5. Verfahren nach Anspruch 3, wobei das Herstellen (504, 606) einer logischen Verbindung mit mindestens einer der n zweiten Vorrichtungen Folgendes umfasst:
Sortieren der n zweiten Vorrichtungen nach einer ersten voreingestellten Regel; und
Herstellen logischer Verbindungen mit ersten m sortierten zweiten Vorrichtungen, wobei m eine positive Ganzzahl kleiner als n ist, und
die erste voreingestellte Regel angibt, dass eine Sortierreihenfolge der zweiten Vorrichtung mit einer geschätzten Wahrscheinlichkeit, dass die zweite Vorrichtung ausgewählt wird, zusammenhängt.

6. Verfahren nach einem der Ansprüche 2 bis 5, wobei die ersten Informationen ferner der mindestens einen der n zweiten Vorrichtungen Folgendes angeben: Starten eines Countdowns, nachdem die mindestens eine zweite Vorrichtung die ersten Informationen empfangen hat; und, nachdem der Countdown abgelaufen ist, Deaktivieren der Wi-Fi-Direct-Verbindungsfunktion oder Wechseln in einen Zustand mit geringem Stromverbrauch.

7. Verfahren nach einem der Ansprüche 1 bis 6, wobei das Verfahren ferner Folgendes umfasst:
Senden zweiter Informationen wenn das Auswahlsignal der Zielvorrichtung erkannt wird, wobei die zweiten Informationen den zweiten Vorrichtungen mit Ausnahme der Zielvorrichtung angeben, die Wi-Fi-Direct-Verbindungsfunktion zu deaktivieren oder in den Zustand mit geringem Stromverbrauch zu wechseln.

8. Verfahren nach Anspruch 6 oder 7, wobei das Verfahren ferner Folgendes umfasst:
Senden dritter Informationen nachdem eine Datenübertragung mit der Zielvorrichtung endet, wobei die dritten Informationen den n zweiten Vorrichtungen mit Ausnahme der Zielvorrichtung angeben, die Wi-Fi-Direct-Verbindungsfunktion zu aktivieren.

9. Verfahren nach einem der Ansprüche 1 bis 8, wobei das Verfahren ferner Folgendes umfasst:
Senden vierter Informationen nachdem ein Rundfunkdienst endet, wobei die vierten Informationen den n zweiten Vorrichtungen angeben, die Wi-Fi-Direct-Verbindungsfunktion zu deaktivieren oder in den Zustand mit geringem Stromverbrauch zu wechseln.

10. Elektronische Vorrichtung, wobei die elektronische Vorrichtung Folgendes umfasst:
einen Prozessor (10); und
einen Speicher (20), der dazu konfiguriert ist, Anweisungen zu speichern, die durch den Prozessor (10) ausgeführt werden können, wobei
der Prozessor dazu konfiguriert ist, das Verfahren nach einem der Ansprüche 1 bis 9 umzusetzen, wenn er die Anweisungen ausführt.

11. Nichtflüchtiges, computerlesbares Speichermedium, wobei das nichtflüchtige, computerlesbare Speichermedium Computerprogrammanweisungen speichert; und, wenn die Computerprogrammanweisungen durch einen Prozessor ausgeführt werden, das Verfahren nach einem der Ansprüche 1 bis 9 umgesetzt wird.

## Revendications

1. Procédé de transmission de données, appliqué à un premier dispositif, dans lequel le procédé comprend :
la réalisation (301) d'une découverte de dispositifs lors de la détection d'un signal de déclenchement prédéfini agissant sur des données à partager ;
l'établissement (302, 503, 605) de liaisons physiques avec n seconds dispositifs découverts, dans lequel des fonctions de connexion Wi-Fi Direct du premier dispositif et des n seconds dispositifs sont activées, n est supérieur à un, et pour chacun des n seconds dispositifs découverts, l'établissement d'une liaison physique comprend l'échange d'informations de capacité de couche physique et la réalisation de l'allocation d'adresses IP et de l'échange d'informations ; et
l'envoi (303, 505, 608) des données à partager à un dispositif cible lors de la détection (607) d'un signal de sélection du dispositif cible, dans lequel le dispositif cible est l'un des n seconds dispositifs.

2. Procédé selon la revendication 1, dans lequel la réalisation de la découverte de dispositifs lors de la détection d'un signal de déclenchement prédéfini agissant sur des données à partager comprend :
l'envoi (501, 602) de premières informations lors de la détection du signal de déclenchement prédéfini agissant sur les données à partager, dans lequel
pour l'un quelconque des n seconds dispositifs, une liaison physique entre le second dispositif et le premier dispositif est établie par le second dispositif sur la base des premières informations reçues, ou est établie par le premier dispositif après que le premier dispositif a reçu des informations de réponse renvoyées par le second dispositif.

3. Procédé selon la revendication 2, dans lequel, après l'établissement (302, 503, 605) de liaisons physiques avec n seconds dispositifs découverts, le procédé comprend également :
l'établissement (504, 606) d'une liaison logique avec au moins l'un des n seconds dispositifs ; et
l'envoi (303, 505, 608) des données à partager à un dispositif cible lors de la détection d'un signal de sélection du dispositif cible comprend :
l'envoi des données à partager au dispositif cible lorsque le signal de sélection du dispositif cible est détecté et que le dispositif cible répond à une première condition prédéfinie, dans lequel
la première condition prédéfinie comprend le fait que le lien physique et le lien logique soient établis entre le premier dispositif et le dispositif cible.

4. Procédé selon la revendication 3, dans lequel le procédé comprend également :
l'établissement de la liaison logique avec le dispositif cible lorsque le signal de sélection du dispositif cible est détecté et que le dispositif cible ne répond pas à la première condition prédéfinie ; et
l'envoi, par le premier dispositif, des données à partager au dispositif cible après que la liaison logique a été établie avec succès.

5. Procédé selon la revendication 3, dans lequel l'établissement (504, 606) d'une liaison logique avec au moins l'un des n seconds dispositifs comprend :
le tri des n seconds dispositifs selon une première règle prédéfinie ; et
l'établissement de liens logiques avec m premiers seconds dispositifs triés, dans lequel m est un entier positif inférieur à n, et
la première règle prédéfinie indique qu'une séquence de tri du second dispositif est liée à une probabilité estimée que le second dispositif soit sélectionné.

6. Procédé selon l'une quelconque des revendications 2 à 5, dans lequel les premières informations indiquent également à l'au moins l'un des n seconds dispositifs de : démarrer un compte à rebours après que l'au moins un second dispositif a reçu les premières informations ; et, après expiration du compte à rebours, désactiver la fonction de connexion Wi-Fi Direct ou entrer dans un état d'économie d'énergie.

7. Procédé selon l'une quelconque des revendications 1 à 6, dans lequel le procédé comprend également :
l'envoi de deuxièmes informations lors de la détection du signal de sélection du dispositif cible, dans lequel les deuxièmes informations indiquent aux seconds dispositifs, à l'exception du dispositif cible, de désactiver la fonction de connexion Wi-Fi Direct ou d'entrer dans l'état de faible consommation d'énergie.

8. Procédé selon la revendication 6 ou 7, dans lequel le procédé comprend également :
l'envoi de troisièmes informations après la fin de la transmission de données avec le dispositif cible, dans lequel les troisièmes informations indiquent aux n seconds dispositifs, à l'exception du dispositif cible, d'activer la fonction de connexion Wi-Fi Direct.

9. Procédé selon l'une quelconque des revendications 1 à 8, dans lequel le procédé comprend également :
l'envoi de quatrièmes informations après la fin d'un service de diffusion, dans lequel les quatrièmes informations indiquent aux n seconds dispositifs de désactiver la fonction de connexion Wi-Fi Direct ou d'entrer dans l'état de faible consommation d'énergie.

10. Dispositif électronique, dans lequel le dispositif électronique comprend :
un processeur (10) ; et
une mémoire (20), configurée pour stocker des instructions qui peuvent être exécutées par le processeur (10), dans lequel le processeur est configuré pour mettre en œuvre le procédé selon l'une quelconque des revendications 1 à 9 lors de l'exécution des instructions.

11. Support de stockage non volatil lisible par ordinateur, dans lequel le support de stockage non volatil lisible par ordinateur stocke des instructions de programme informatique, et lorsque les instructions de programme informatique sont exécutées par un processeur, le procédé selon l'une quelconque des revendications 1 à 9 est mis en œuvre.
